# EUROPÄISCHE PATENTSCHRIFT

(11) **EP 3 167 201 B1**
(45) Veröffentlichungstag und Bekanntmachung des Hinweises auf die Patenterteilung: **22.01.2020**
(21) Anmeldenummer: 15721010.5
(22) Anmeldetag: 11.05.2015
(51) Int. Cl.: F16D 65/12

(54) **BREMSSCHEIBE FÜR EIN KRAFTFAHRZEUG, BREMSEINRICHTUNG**
BRAKE DISC FOR A MOTOR VEHICLE, BRAKE SYSTEM
DISQUE DE FREIN POUR UN VÉHICULE AUTOMOBILE, DISPOSITIF DE FREINAGE

(30) Priorität: 10.07.2014 DE 102014213402
(43) Veröffentlichungstag der Anmeldung: 17.05.2017
(73) Patentinhaber: Robert Bosch GmbH, 70442 Stuttgart (DE)
(72) Erfinder: HUSCHENHOEFER, Wolfgang, 35614 Asslar (DE); MUELLER, Hans-Walter, 80939 München (DE)
(86) Internationale Anmeldenummer: PCT/EP2015/060296
(87) Internationale Veröffentlichungsnummer: WO 2016/005080

(56) Entgegenhaltungen:
- WO-A1-2013/127896
- JP-U- S5 429 283
- US-A- 5 143 184
- US-A1- 2009 020 379
- US-A1- 2012 186 919
- US-B2- 7 163 653

## Beschreibung

Die Erfindung betrifft eine Bremsscheibe für ein Kraftfahrzeug, mit einem Reibring und wenigstens einem in dem Reibring befindlichen Einlegeteil.

Ferner betrifft die Erfindung eine Bremseinrichtung für ein Kraftfahrzeug mit einer entsprechenden Bremsscheibe.

### Stand der Technik

Bremsscheiben und Bremseinrichtungen der eingangs genannten Art sind aus dem Stand der Technik bekannt. So offenbart beispielsweise die Offenlegungsschrift WO 2013/127896 A1 eine Bremsscheibe für ein Kraftfahrzeug mit einem Reibring, in welchem ein Einlegeteil eingegossen ist, wobei das Einlegeteil eine schaumartige, poröse Struktur aufweisen soll. Das Einlegeteil kann dabei in Form von Geflechten, Stiften oder Nadeln eingegossen werden.

Die Offenlegungsschrift US 5,143,184 A beschreibt eine Bremsscheibe der gattungsgemäßen Art. Die Bremsscheibe sieht ein in einem Reibring befindliches Einlegeteil vor, das ringförmig ausgebildet und koaxial zu dem Reibring angeordnet ist. Das Einlegeteil weist mehrere Durchbrüche auf, die durch Material des Reibrings gefüllt sind. Dabei sind die Durchbrüche des Einlegeteils gleich groß und weisen eine gleiche Kontur auf.

Aus der Patentschrift US 7,163,653 B2 ist es bekannt, ein in einem Reibring angeordnetes thermoplastisches Einlegeteil zu pyrolisieren, so dass eine fertige Bremsscheibe an den Stellen, wo vorher das Einlegeteil angeordnet war, Lüftungskanäle aufweist.

Aus der Offenlegungsschrift JP S54 29283 U ist außerdem eine Reibscheibe bekannt, die durch das Ausbilden unterschiedlich positionierter und unterschiedlicher großer Öffnungen in einem Einlegeteil einen vom Rotationszentrum verschobenen Schwerpunkt aufweist.

### Offenbarung der Erfindung

Die erfindungsgemäße Bremsscheibe mit den Merkmalen des Anspruchs 1 hat den Vorteil, dass sie schwingungsoptimiert ausgelegt ist, so dass Schwingungen in dem Reibring durch eine besondere Gestaltung des Einlegeteils gedämpft werden. Erfindungsgemäß ist vorgesehen, dass das Einlegeteil ringscheibenförmig ausgebildet und koaxial zu dem Reibring angeordnet ist, wobei das Einlegeteil mehrere Durchbrüche aufweist, die durch Material des Reibrings gefüllt sind. Das Einlegeteil ist also ringscheibenförmig ausgebildet und koaxial zu dem Reibring in dem Reibring angeordnet, so dass das Einlegeteil vollumfänglich vom Material des Reibrings, insbesondere von Gussmaterial des Reibrings umgeben ist. Dabei weist das Einlegeteil mehrere Durchbrüche auf, wobei die Durchbrüche von Material des Reibrings gefüllt sind. Unter einem Durchbruch ist in diesem Zusammenhang eine sich durch das Einlegeteil vollständig hindurch erstreckende Öffnung zu verstehen. Damit erstreckt sich der Reibring durch die Durchbrüche des Einlegeteils abschnittsweise hindurch. Anders herum gesagt weist der Reibring mehrere Verbindungsabschnitte auf, die sich durch den Reibring beziehungsweise die Durchbrüche des Reibrings hindurch erstrecken. Hierdurch kann eine vorteilhafte Schwingungsdämpfung der Bremsscheibe auf einfache Art und Weise erreicht werden. Insbesondere kann die Schwingungsdämpfung durch Anzahl und Ausbildung der Durchbrüche an einem jeweiligen Anwendungsfall auf einfache Art und Weise angepasst werden.

Erfindungsgemäß ist vorgesehen, dass die Durchbrüche gleichmäßig über den Umfang des Einlegeteils verteilt angeordnet sind. Dadurch ergibt sich einerseits eine vorteilhafte Schwingungsdämpfung für die Bremsschreiben und andererseits wird gewährleistet, dass keine Unwuchten in der Bremsschreibe aufgrund unregelmäßiger Durchbrüche und damit aufgrund einer unregelmäßigen Materialverteilung entstehen können.

Gemäß einer bevorzugten Weiterbildung der Erfindung ist außerdem vorgesehen, dass das Einlegeteil aus einem Keramikwerkstoff gefertigt ist. Die Ausbildung des Einlegeteils als Keramikeinlegeteil führt zu dem Vorteil, dass das Gesamtgewicht der Bremsscheibe gering gehalten wird, und gleichzeitig die optimale Schwingungsdämpfung erzielbar ist. Aufgrund der Porosität, die bei einem Keramikbauteil in der Regel gegeben ist, wird außerdem erreicht, dass eine vorteilhafte Verbindung von Reibring und Einlegeteil über den gesamten Umfang des Einlegeteils hinweg gewährleistet wird. Zusätzlich zu den Durchbrüchen, durch welche sich das Material des Reibrings vollständig hindurch erstreckt, erlaubt die poröse Oberfläche des Keramikeinlegeteils, dass am Rand des Einlegeteils Material des Reibrings bereichsweise eindringen kann, wodurch eine besonders kompakte und feste Verbindung zwischen Reibring und Einlegeteil gewährleistet ist.

Erfindungsgemäß ist vorgesehen, dass die Durchbrüche zumindest zwei unterschiedliche Größen aufweisen. Während grundsätzlich die Durchbrüche gleich ausgebildet sein können, ist hierbei also vorgesehen, dass zwei unterschiedliche Arten von Durchbrüchen vorgesehen sind, die sich insbesondere in ihrer Querschnittsfläche unterscheiden. Dadurch ergeben sich unterschiedlich breite Durchdringungsabschnitte des Reibrings durch das Einlegeteil. Je nach Wahl der Größen kann somit das Schwingungsverhalten der Bremsscheibe weiter beeinflusst werden.

Erfindungsgemäß ist alternativ oder zusätzlich zu den zumindest zwei unterschiedlichen Größen vorgesehen, dass die Durchbrüche zumindest zwei unterschiedliche Konturen aufweisen. Durch die gewählte Kontur kann das Schwingungsverhalten der Bremsscheibe beeinflusst werden. Durch das Vorsehen von mindestens zwei unterschiedlichen Konturen wird das Schwingungsverhalten weiter optimiert. Alternativ können alle Durchbrüche die gleiche Kontur aufweisen.

Gemäß einer vorteilhaften Weiterbildung der Erfindung ist vorgesehen, dass das Einlegeteil mit mehreren vorstehenden Rippen versehen ist. Durch das Umgießen des Einlegeteils mit dem Material des Reibrings wird dadurch ein weiterer Formschluss erzeugt, der zu dem Schwingungsverhalten der Bremsscheibe beiträgt.

Die erfindungsgemäße Bremseinrichtung mit den Merkmalen des Anspruchs 4 weist wenigstens eine einem Rad des Kraftfahrzeugs zuordenbare Bremsscheibe und eine der Bremsschreibe zugeordnete und betätigbare Bremsbackeneinrichtung auf. Die Bremseinrichtung zeichnet sich durch die erfindungsgemäße Ausbildung der Bremsscheibe aus. Es ergeben sich hierdurch die genannten Vorteile bezüglich des vorteilhaften Schwingungsdämpfungsverhalten der Bremsscheibe, das sich vorteilhaft auf den Betrieb der Bremseinrichtung auswirkt. Weitere Merkmale und Vorteile ergeben sich aus dem zuvor bereits Beschriebenen sowie aus den Unteransprüchen.

Im Folgenden soll die Erfindung anhand eines Ausführungsbeispiels näher erläutert werden. Dazu zeigen:
Figur 1 eine Bremseinrichtung für ein Kraftfahrzeug in einer vereinfachten Draufsicht und
Figur 2 die Bremseinrichtung in einer vereinfachten Seitenansicht.

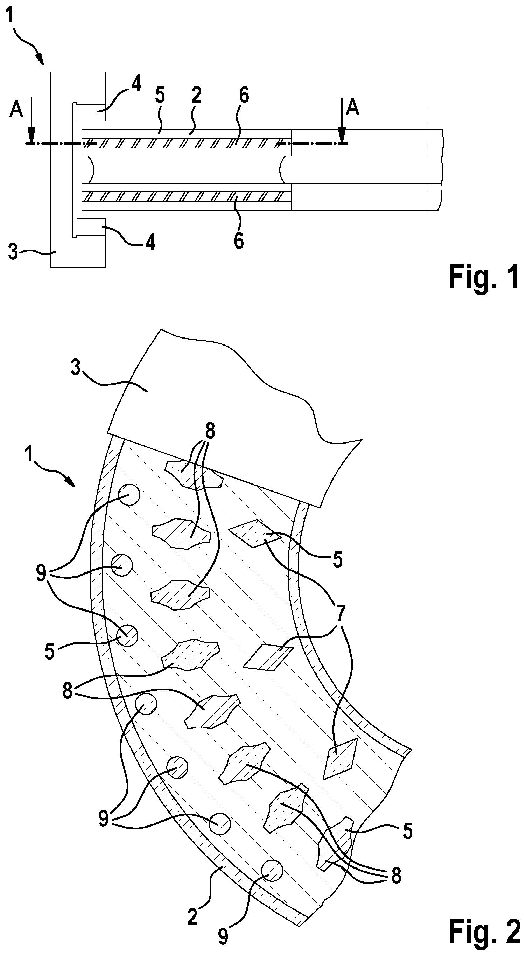

Figur 1 zeigt in einer vereinfachten Schnittdarstellung eine Bremseinrichtung 1 für ein hier nicht näher dargestelltes Kraftfahrzeug. Die Bremseinrichtung 1 weist eine einem Rad des Kraftfahrzeugs zuordenbare Bremsscheibe 2 sowie eine der Bremsscheibe 2 zugeordnete Bremseinrichtung 3 auf. Die Bremseinrichtung 3 weist zwei verlagerbare Bremsbacken 4 auf, die zum Durchführen des Bremsvorgangs gegen die Stirnseiten der Bremsscheibe 2 pressbar sind. Derartige Bremseinrichtungen 1 sind grundsätzlich bekannt, so dass an dieser Stelle nicht näher darauf eingegangen werden soll. Vorliegend ist zu erkennen, dass die Bremsscheibe 2 einen Reibring 5 aufweist, in welchem sich zwei Einlegeteile 6 befinden. Der Reibring 5 ist kreisringförmig ausgebildet und aus einem Gussmaterial hergestellt. Die Einlegeteile 6 sind ebenfalls kreisringförmig ausgebildet und liegen im Inneren des Reibrings 5. Die Einlegeteile 6 sind dabei aus einem Keramikwerkstoff hergestellt.

Figur 2 zeigt eine Schnittdarstellung durch die Bremsscheibe 2 entlang der Linie A-A aus Figur 1, die in der Ebene eines der Einlegeteile 6 liegt. Das Einlegeteil 6 weist über seinen Umfang verteilt mehrere Durchbrüche 7, 8 und 9 auf. Die Durchbrüche 7, 8 und 9 weisen jeweils unterschiedliche Konturen auf, und sind gleichmäßig über den Umfang des Einlegeteils 6 verteilt angeordnet. Die Durchbrüche 7 weisen eine rautenförmige Kontur, die Durchbrüche 9 eine kreisförmige Kontur und die Durchbrüche 8 eine sternförmige Kontur auf. Da die Durchbrüche 7, 8, 9 sich vollständig durch das Material des Einlegeteils 6 hindurch erstrecken, werden die Durchbrüche bei der Herstellung der Bremsscheibe 2 von dem Material des Reibrings 5 durchdrungen. Es ergeben sich hierdurch vorteilhafte Schwingungseigenschaften für die Bremsscheibe 7. Durch die Ausbildung des Einlegeteils 6 beziehungsweise der Einlegeteile 6 aus Keramik wird dabei außerdem das Gewicht der Bremsscheibe 2 insgesamt verringert. Durch die Anzahl und Ausbildung der Durchbrüche 7, 8 und 9 lässt sich das Schwingungsverhalten der Bremsscheibe 2 an den jeweiligen Anwendungsfall anpassen. Insbesondere kann vorgesehen sein, dass nur die Durchbrüche 7 oder nur die Durchbrüche 8 oder nur die Durchbrüche 9 vorgesehen sind. Ebenso kann vorgesehen sein, dass die Durchbrüche 7, 8 und/oder 9 auf dem gleichen Radius des Einlegeteils liegen, und nicht wie in dem vorliegenden Ausführungsbeispiel auf unterschiedlichen Radien.

## Patentansprüche

1. Bremsscheibe (1) für ein Kraftfahrzeug, mit einem Reibring (5) und wenigstens einem in dem Reibring (5) befindlichen Einlegeteil (6), wobei das Einlegeteil (6) ringscheibenförmig ausgebildet und koaxial zu dem Reibring (5) angeordnet ist, wobei das Einlegeteil (6) mehrere Durchbrüche (7,8,9) aufweist, die durch Material des Reibrings (5) gefüllt sind, wobei die Durchbrüche (7,8,9) zumindest zwei unterschiedliche Größen und/oder zumindest zwei unterschiedliche Konturen aufweisen und gleichmäßig über den Umfang des Einlegeteils (6) verteilt angeordnet sind, sodass keine Unwuchten in der Bremsscheibe entstehen.

2. Bremsscheibe nach Anspruch 1, **dadurch gekennzeichnet, dass** das Einlegeteil (6) aus einem Keramikwerkstoff gefertigt ist.

3. Bremsscheibe nach einem der vorhergehenden Ansprüche, **dadurch gekennzeichnet, dass** das Einlegeteil (5) wenigstens eine, insbesondere mehrere vorstehende Rippen aufweist.

4. Bremseinrichtung (1) für ein Kraftfahrzeug, mit wenigstens einer einem Rad des Kraftfahrzeugs zuordenbaren Bremsscheibe (2), und mit wenigstens einer der Bremsscheibe (2) zugeordneten und betätigbaren Bremseinrichtung (3), **gekennzeichnet durch** die Ausbildung der Bremsscheibe (2) nach einem oder mehreren der vorhergehenden Ansprüche.

## Claims

1. Brake disk (1) for a motor vehicle having a friction ring (5) and at least one insert portion (6) which is located in the friction ring (5), wherein the insert portion (6) is constructed in the form of an annular disk and is arranged coaxially with respect to the friction ring (5), wherein the insert portion (6) has a plurality of openings (7, 8, 9) which are filled by material of the friction ring (5), wherein the openings (7, 8, 9) have at least two different sizes and/or at least two different contours and are arranged so as to be distributed uniformly over the periphery of the insert portion (6) so that no imbalances arise in the brake disc.

2. Brake disk according to Claim 1, **characterized in that** the insert portion (6) is produced from a ceramic material.

3. Brake disk according to one of the preceding claims, **characterized in that** the insert portion (5) has at least one, in particular a plurality of projecting ribs.

4. Brake system (1) for a motor vehicle having at least one brake disk (2) which can be associated with a wheel of the motor vehicle and having at least one brake device (3) which is associated with the brake disk (2) and which can be actuated, **characterized by** the construction of the brake disk (2) according to one or more of the preceding claims.

## Revendications

1. Disque de frein (1) pour un véhicule automobile, comprenant un anneau de friction (5) et au moins une partie d'insertion (6) se trouvant dans l'anneau de friction (5), la partie d'insertion (6) étant réalisée sous forme de disque annulaire et étant disposée coaxialement par rapport à l'anneau de friction (5), la partie d'insertion (6) présentant plusieurs orifices (7, 8, 9) qui sont remplis avec la matière de l'anneau de friction (5), les orifices (7, 8, 9) présentant au moins deux tailles différentes et/ou au moins deux contours différents et étant disposés de manière répartie uniformément sur la périphérie de la partie d'insertion (6), de telle sorte qu'il ne se produise aucun déséquilibre dans le disque de frein.

2. Disque de frein selon la revendication 1, **caractérisé en ce que** la partie d'insertion (6) est fabriquée à partir d'un matériau en céramique.

3. Disque de frein selon l'une quelconque des revendications précédentes, **caractérisé en ce que** la partie d'insertion (5) présente au moins une, notamment plusieurs, nervures saillantes.

4. Système de freinage (1) pour un véhicule automobile, comprenant au moins un disque de frein (2) pouvant être associé à une roue du véhicule automobile, et comprenant au moins un système de freinage (3) associé au disque de frein (2) et pouvant être actionné, **caractérisé par** la réalisation du disque de frein (2) selon l'une quelconque ou plusieurs des revendications précédentes.
